# EUROPÄISCHE PATENTANMELDUNG

(11) **EP 3 819 358 A1**
(43) Veröffentlichungstag der Anmeldung: **12.05.2021**
(21) Anmeldenummer: 19207346.8
(22) Anmeldetag: 06.11.2019
(51) Int. Cl.: C10J 3/04, C10J 3/10, C10J 3/16, C10J 3/32, C10J 3/72, G21F 9/34, C10B 53/00

(54) **ENTSORGUNGSVERFAHREN**

(71) Anmelder: Enrichment Technology Company Ltd. Zweigniederlassung Deutschland, 52428 Jülich (DE)
(72) Erfinder: AGREITER, Jürgen, 52349 Düren (DE); KRONHOLZ, Stephan, 52428 Jülich (DE); SIEGERT, Swen, 52445 Titz (DE)
(74) Vertreter: FARAGO Patentanwälte

(57) **Zusammenfassung**

Die Erfindung betrifft ein Verfahren zur Entsorgung eines Verbundwerkstoffs, insbesondere eines beispielsweise radioaktiv kontaminierten Verbundwerksstoffs. Das erfinderische Verfahren zur Entsorgung eines Bauteils aus einem Verbundwerkstoff, ist dadurch gekennzeichnet, dass das Bauteil chemisch vergast wird, wobei zumindest ein Teil des Verbundwerkstoffs in seine Grundbestandteile zerlegt wird.

## Beschreibung

Die Erfindung betrifft ein Verfahren zur Entsorgung eines einen Verbundwerkstoff enthaltenden Bauteils, insbesondere eines beispielsweise Bauteils, das einen radioaktiv kontaminierten Verbundwerksstoff enthält.

Moderne Werkstoffe, insbesondere moderne Hochleistungswerkstoffe enthalten zunehmend Spezialmaterialien, die die Entsorgung erschweren. Ein hervorstechendes Beispiel ist die Verwendung von Kohlefasern in Verbundwerkstoffen, den kohlefaserverstärkten Kunststoffen CFK. Die Kohlefaser als Konstruktionsstoff ist ein extrem widerstandsfähiges Material, womit Bauteile aus CFK einerseits sehr hohe Festigkeitswerte und andererseits ein außergewöhnlich geringes Gewicht aufweisen. Daher werden CFK-Bauteile zunehmend für hochbelastete Strukturen verwendet, bei denen ein niedriges Gewicht erforderlich oder wünschenswert ist. Dies können beispielsweise Bauteile eines Flugzeugs oder eines Raumfahrzeugs oder auch dynamisch hochbelastete Bauteile sein, bei denen Trägheitsmomente geringgehalten werden sollen. Insbesondere können solche Bauteile auch Bauteile aus Zentrifugen für die Urananreicherung sein, wobei für die Entsorgung solcher Bauteile erschwerend hinzukommt, dass die Bauteile radioaktiv kontaminiert sein können.

Im Stand der Technik ist es bekannt, CFK-Bauteile zu entsorgen, indem sie verbrannt werden. Dies ist allerdings nur bei hohen Temperaturen mit weiterem Brennstoff und Sauerstoffzugabe möglich. Dies liegt schon in der Herstellung der Kohlefaser begründet, bei der der Kohlefasergrundstoff oberhalb von 2000°C carbonisiert und je nach Fasertyp mehr oder weniger graphitisiert wird. Ist ein CFK-Bauteil beispielsweise mit Fluor oder Uran verunreinigt, würde es bei einer herkömmlichen Verbrennung zu einer unkontrollierten Freisetzung von Fluor- und/oder Uranverbindungen kommen oder sicherheitsrelevante Gefahrstoffe, die beispielsweise explosionsgefährdet und/oder giftig sind, entstehen. Daher ist eine herkömmliche Verbrennung hier nicht möglich.

Aufgabe der Erfindung ist es, ein Verfahren anzugeben, mit dem eine gesetzeskonforme, möglichst umweltfreundliche Entsorgung eines Bauteils aus einem Verbundwerkstoff, beispielsweise aus CFK, und insbesondere eines radioaktiv kontaminierten Bauteils aus einem Verbundwerkstoff möglich ist.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2 bis 16.

Das erfinderische Verfahren zur Entsorgung eines einen Verbundwerkstoff enthaltenden Bauteils, ist dadurch gekennzeichnet, dass das Bauteil chemisch vergast wird, wobei zumindest ein Anteil des Verbundwerkstoffs in seine Grundbestandteile zerlegt wird. Dabei ist natürlich anzustreben, dass der Verbundwerkstoff weitest möglich in seine Grundbestanteile zerlegt wird.

### Begrifflich sei dazu erklärt:

Hier und im Folgenden wird unter einem **Bauteil** ein Einzelteil eines technischen Komplexes verstanden. Der technische Komplex kann mehrere Bauteile aufweisen. Der technische Komplex kann beispielsweise eine Anlage zur Urananreicherung sein, wobei ein Bauteil hierbei beispielsweise ein Zentrifugenkörper sein kann. Das Bauteil kann in diesem Fall u.a. einen **Verbundwerkstoff** aufweisen, insbesondere einen Faserverbund mit einer in einen Matrixwerkstoff eingebetteten Faser. Beispielsweise kann es sich bei dem Verbundwerkstoff und einen **kohlenstofffaserverstärkten Kunststoff,** auch **CFK** genannt, handeln. CFK besteht aus Kohlenstofffasern, die in eine Matrix aus Kunstharz eingebettet sind. Dabei profitieren die mechanischen Eigenschaften des ausgehärteten Verbunds vor allem von der Zugfestigkeit und der Steifigkeit der Kohlenstofffasern. Die Matrix verhindert, dass sich die Fasern unter Belastung gegeneinander verschieben. Die Festigkeit und die Steifigkeit eines aus CFK hergestellten Materials sind in Faserrichtung wesentlich höher als quer zur Faserrichtung. Deshalb können einzelne Faserlagen in verschiedenen Richtungen verlegt sein. Die Faserrichtungen werden vom Konstrukteur festgelegt, um eine gewünschte Festigkeit und Steifigkeit zu erreichen. Kohlenstofffasern haben im Vergleich zu Werkstoffen wie Stahl eine deutlich geringere Dichte (∼ Faktor 4,3). Ihre gewichtsspezifische Steifigkeit in Faserrichtung ist, je nach Fasertyp, etwas (ca. 10-15 %) oder sogar deutlich (ungefähr Faktor 2) höher als Stahl. Auf diese Weise entsteht ein sehr steifer Werkstoff, der sich besonders für Anwendungen mit einer Hauptbelastungsrichtung eignet, bei denen es auf eine geringe Masse bei gleichzeitig hoher Steifigkeit ankommt. Insbesondere auch bei hochdynamisch belasteten Bauteilen ist der Einsatz von CFK vorteilhaft, da dynamische Kräfte wegen der geringeren Masse von CFK-Bauteilen im Vergleich zu beispielsweise entsprechenden Stahlbauteilen geringer sind.

**Entsorgung** wird in dieser Schrift als Oberbegriff verwendet für alle Verfahren und Tätigkeiten, die der Beseitigung oder Verwertung von Abfällen dienen. Entsorgung dient somit der Abfallbeseitigung, also der Abgabe von Abfällen an die Umwelt unter Einhaltung vorgeschriebener Grenzwerte oder die Überführung in ein Endlager. Insbesondere ist die Entsorgung von radioaktiven Feststoffabfällen ein größtenteils ungelöstes Problem, wobei solche Abfälle heute nur nach vorheriger Konditionierung und Verpackung in geeigneten Endlagerplätzen lagern können. Solche geeigneten Endlagerplätze sind selten. Die Lagerkapazität von bekannten Endlagerplätzen für radioaktiven Feststoffabfall ist sehr begrenzt und insbesondere geringer als der Bedarf.

**Vergasung** ist die Umwandlung eines Feststoffs oder einer Flüssigkeit in ein Gas. Bei der **chemischen Vergasung** erfolgt im Gegensatz zum Verdampfen eine Aufspaltung und Neuordnung bestehender chemischer Verbindungen durch Cracken bzw. Pyrolyse und/oder Reduktion bzw. partielle Oxidation. Dieser Vorgang geschieht bei hohen Temperaturen, mit einer begrenzten Menge an Sauerstoff.

Unter einem **Grundbestandteil** wird in dieser Schrift ein Zersetzungsprodukt des Verbundwerkstoffs verstanden. Bei der Zersetzung wird eine chemische Verbindung des Verbundwerkstoffs in kleinere Moleküle oder sogar in chemische Elemente zerlegt. Die Zersetzung einer chemischen Substanz geschieht dabei beispielsweise durch Zufuhr von Energie in Form von Wärme. Dabei bewirkt die zugeführte Energie das Aufspalten von Bindungen innerhalb von Molekülen. Dabei entstehen oftmals Radikale, die dann als instabile, energiereiche Teilchen weiterreagieren. Unter Ausschluss von Oxidationsmitteln wie dem Luftsauerstoff kann diese Zersetzung bis zu den Elementen erfolgen, aus denen die Verbindung aufgebaut ist oder zu unter den gewählten Bedingungen thermodynamisch stabilsten Verbindungen. Sind bei einer Zersetzung Oxidationsmittel anwesend, entstehen aus brennbaren Stoffen unter Verbrennung die stabilsten Verbindungen mit dem Oxidationsmittel, teils auch ohne Energiezufuhr. Ist das Oxidationsmittel Sauerstoff (beispielsweise aus der Luft), so werden bei organischen Verbindungen Wasser H₂O und Kohlenstoffdioxid CO₂ (eventuell auch Schwefeloxide, Stickoxide oder Stickstoff als Gas) gebildet, bei anorganischen Stoffen meist Oxide oder andere sauerstoffhaltige Verbindungen wie Sulfate, Phosphate oder Silikate.

In einer bevorzugten Ausführungsform des Verfahrens werden alle vergasbaren Bestandteile des Verbundwerkstoffs schrittweise prozessiert, wodurch eine weitestgehende Auftrennung in die Grundbestandteile möglich ist. Dabei kann die Energiezufuhr ebenfalls schrittweise gesteigert werden, so dass zunächst die Bestandteile mit dem niedrigsten für die Vergasung benötigten Energiebedarf vergast werden und nach Steigerung der Energiezufuhr um einen Schritt die Bestandteile mit dem entsprechend höheren Energiebedarf vergast werden. Die verschiedenen Bestandteile können dabei einzeln abgegriffen werden. Dieses Vorgehen entspricht dem sogenannten Batch-Betrieb: die Probe wird in einen Ofen gelegt, der komplette Prozess wird mit allen Heizstufen nacheinander abgefahren und bei jedem Schritt wird die jeweilige Gaszusammensetzung abgegriffen. Die Schrittweite kann dabei entsprechend dem zu vergasenden Verbundwerkstoff gewählt werden. Die Energiezufuhr kann solange erhöht werden, bis alle vergasbaren Bestandteile des Verbundwerkstoffs zerlegt und in den gasförmigen Aggregatzustand überführt sind.

Alternativ kann der Prozess auch mit einer dem zu prozessierenden Verbundwerkstoff entsprechenden Maximalenergiezufuhr gestartet werden. Dabei gehen alle vergasbaren Bestandteile in den gasförmigen Zustand über. Die verschiedenen Gase können über weitere und dem Fachmann bekannte spezielle Trennverfahren wie beispielsweise Säurewäsche, Destillation, etc., anschließend getrennt werden. Mit diesem Verfahren ist ein kontinuierlicher Betrieb möglich.

Die Energie kann in jedem Fall beispielsweise in Form von Wärme beispielsweise in einem Ofen zugeführt werden.

Mineralische Verbindungen aus dem evtl. verunreinigten Verbundwerkstoff, insbesondere Metalle und Metallverbindungen wie beispielsweise evtl. Uranverbindungen, verbleiben als Feststoff in der Asche und können als Feststoff leicht separiert werden. Auch kann der Faserwerkstoff als solcher als prozessierter Stoff vorliegen, d.h. den Prozess im Wesentlichen umbeschadet überstehen, so dass er als Faserwerkstoff wiederverwendbar ist.

Das Wirkprinzip der Trennung ist eine Kombination aus Pyrolyse, Hydrolyse und partieller Oxidation. Dabei werden mit der Pyrolyse vornehmlich Harzverbindungen und mit der partiellen Oxidation vornehmlich Kohlenstoffverbindungen prozessiert. Fluorverbindungen werden im Wesentlichen hydrolysiert und Uranverbindungen werden im Fall von Uranyl hydrolysiert. Andere Uranverbindungen bleiben unverändert oder werden leicht reduziert. Auch Harzverbindungen werden teilweise hydrolisiert. Durch die Kombination dieser Wirkprinzipien wird die möglichst weitgehende Auftrennung aller Bestandteile auch evtl verunreinigter Verbundwerkstoffbauteile erreicht und damit die umweltfreundliche Entsorgung solcher Bauteile ermöglicht.
Aus reaktionskinetischen Gründen kann es erforderlich sein, den Prozess in zwei hintereinandergeschalteten Öfen zu betreiben, so dass Hydrolyse und partielle Oxidation evtl. kontinuierlich getrennt betrieben werden können.

In einer weiteren vorteilhaften Ausführungsform wird die chemische Vergasung unter Einwirkung von mechanischer Energie durchgeführt. Die mechanische Energie kann dabei beispielsweise über eine Drehbewegung, beispielsweise durch Rühren, eingebracht werden In einer weiteren Ausführungsform wird die mechanische Energie alternativ oder zusätzlich über eine Verwirbelung des Bauteils und/oder von Teilen des Bauteils eingebracht. Unter Verwirbelung ist dabei eine drehende Bewegung von Fluidelementen um eine gerade oder geschwungene Drehachse zu verstehen. Dabei dient die Zuführung der mechanischen Energie in erster Linie der Schaffung neuer Oberflächen und/oder der Erzielung einer Schürwirkung und damit der Schaffung von besseren Angriffsmöglichkeiten eines Oxidationsmittels. In jedem Fall ist die zugeführte thermische Energie signifikant höher als die zugeführte mechanische Energie. Die Erhöhung der Zuführung von mechanischer Energie über einen Schwellwert hinaus hat auf die Chemie bzw. die Reaktionsgeschwindigkeit keinen weiteren nennenswerten Effekt.

Es hat sich als vorteilhaft erwiesen, wenn die chemische Vergasung bei einer Temperatur von mehr als 800°C durchgeführt wird. Dabei kann die Vergasung in einem Ofen, beispielsweise einem Drehrohr- oder Paddelofen oder in einem Wirbelschichtreaktor durchgeführt werden.

In einer weiteren vorteilhaften Ausführungsform wird dem Prozess zur energetischen Regulierung ein Moderator zugeführt. Unter einem Moderator wird dabei ein Prozessmedium verstanden, das Einfluss auf den Energiehaushalt des Prozesses hat.

In einer vorteilhaften Ausführungsform enthält der Moderator Wasser, wobei das Wasser über eine Restfeuchte des Werkstoffs des Bauteils in den Prozess eingebracht wird. Unter Restfeuchte des Werkstoffs ist auch der Fall zu verstehen, dass zwar der Werkstoff des Bauteils selbst keine oder nur eine geringe Restfeuchte aufweist, das Bauteil aber vor der Prozessierung vorbehandelt, beispielsweise geschreddert, wird, wobei Feuchtigkeit dem Werkstoff beigefügt wird. Beispielsweise ist es üblich, Bauteile unter Hinzufügung von Wasser zu schreddern, beispielsweise um den Staubanfall beim Schreddern zu minimieren. Werden dann die geschredderten Teile des Bauteils dem Prozess zugefügt, wird gleichzeitig Feuchtigkeit in den Prozess eingetragen, wobei diese Feuchtigkeit als Moderator dienen kann. Der Moderator kann dem Prozess auch gasförmig zugeführt werden, insbesondere auch geregelt oder gesteuert zudosiert, wobei der Moderator Wasserdampf, Ammoniak und / oder Kohlenstoffdioxid enthält.

Es hat sich als besonders vorteilhaft erwiesen, wenn der Prozess der chemischen Vergasung endotherm geführt wird. Dabei kann die endothermische Prozessführung über eine definierte Zuführung eines Moderators in Abhängigkeit des zu vergasendem Verbundwerkstoffs und/oder der Prozesstemperatur und/oder der Prozessgeschwindigkeit erzwungen werden. Mit der Zuführung des Moderators wird die freiwerdende Energie im Prozess reduziert. Durch Zuführung des Moderators kann der Prozess endotherm geführt werden, womit der Prozess intrinsisch sicher abläuft und nicht "durchgehen" kann.

Zusätzlich kann der zugeführte Moderator als evtl. zusätzliches Hydrolysemittel dienen.

Weiterhin hat es sich als vorteilhaft erwiesen, wenn dem Prozess ein Oxydationsmittel zugeführt wird. Dabei ist ein Oxydationsmittel ein Stoff, der andere Stoffe oxidieren kann und dabei selbst reduziert wird. Oxidationsmittel können Elektronen aufnehmen. Das Oxydationsmittel kann Sauerstoff enthalten. Beispielsweise kann das Oxydationsmittel eine leicht sauerstoffabgebende Verbindung, wie beispielsweise Wasserstoffperoxid, Permanganat oder Dichromat, oder auch reiner Sauerstoff sein.

In einer vorteilhaften Ausführungsform wird das Oxidationsmittel derart dosiert, dass der Prozess unter kontrollierbaren Bedingungen abläuft, wobei die Entstehung von umwelt- und/oder gesundheitsgefährdenden Reaktionsprodukten vermieden wird. Hierbei kann die Zuführung des Oxydationsmittels gesteuert oder geregelt werden. Als Regelgröße kann beispielsweise die Prozesstemperatur genutzt werden. Aber auch der Volumendurchsatz kann benutzt werden, um den Zuführungsstrom des Oxidationsmittels zu steuern oder zu regeln. Beide Größen lassen sich leicht messen und sind durch die Variation der zugeführten Menge an Oxidationsmittel je Zeiteinheit leicht zu beeinflussen. Dabei kann es bei einer unkontrollierten Zuführung von Oxidationsmittel zu einer explosionsartigen, exothermen Reaktion kommen, was über eine gesteuerte oder geregelte Oxidationsmittelzufuhr wirkungsvoll verhinderbar ist.

In einer weiteren vorteilhaften Ausführungsform werden Prozessgeschwindigkeit und Materialdurchsatz derart geregelt, dass eine vollständige Umsetzung aller vergasbaren Werkstoffe des Bauteils erfolgt. Dabei wird hier unter dem Begriff regeln auch ein Steuern verstanden. Mit anderen Worten soll unter regeln hier die gerichtete Beeinflussung des Verhaltens des Prozesses mit oder ohne Rückkopplung verstanden werden. Dem Begriff vollständige Umsetzung soll ein technisches Verständnis unterliegen. Mit anderen Worten muss "vollständig" keine absolute Vollständigkeit bedeuten, auch die nahezu vollständige Umsetzung mit technisch vernachlässigbaren, nicht umgesetzten Restmengen an Werkstoffen soll unter den Begriff "vollständige Umsetzung" fallen. Der Umsetzungsgrad lässt sich in weiten Grenzen über die Prozessgrößen Energieeintrag und Massendurchsatz an Oxidationsmittel und umzusetzenden Werkstoff beeinflussen. Dabei fällt unter den Begriff Energieeintrag das Eintragen sowohl von thermischer als auch mechanischer Energie.

In einer weiteren Ausführungsform des Verfahrens werden kondensierbare Stoffe des Bauteils, die höchstens partiell umgesetzt wurden, nachverbrannt. Unter dem Begriff "Stoffe" werden in dieser Schrift aus dem prozessierten Werkstoff entstandene Prozessprodukte verstanden. Diese Stoffe können gasförmig, flüssig oder fest sein. Die Stoffe können weiterverwertbar oder nicht sinnvoll weiternutzbar sein. Die Nachverbrennung ist dem Fachmann bekannt, so dass er geeignete Verfahren und Verfahrensparameter auswählen kann.

Mit dem erfindungsgemäßen Verfahren ist die gesetzeskonforme und umweltverträgliche stoffliche Trennung insbesondere kontaminierter Abfälle möglich. Insbesondere bei radioaktiv kontaminierten Abfällen ist eine Dekontamination erforderlich, die über die Zerlegung der Werkstoffe des kontaminierten Bauteils in seine Grundbestandteile möglich wird. Eventuell nicht dekontaminierbare Teile des Bauteils bzw. Werkstoffe müssen nach wie vor endgelagert werden. Da diese aber über das Verfahren minimiert werden und insbesondere auch deutlich weniger Volumen aufweisen als das ursprüngliche Bauteile, werden die Kapazitäten der verfügbaren Endlager deutlich weniger belastet. Erfolgt durch den Prozess eine vollständige Materialauftrennung, können sogar kontaminierend wirkende Werkstoffe, Verunreinigungen und/oder Stoffe, insbesondere auch Uran bzw. Uranverbindungen, zurückgewonnen und die Endlagerung solcher Materialien komplett vermieden werden.

Weitere Vorteile, Besonderheiten und zweckmäßige Weiterbildungen der Erfindung ergeben sich aus den Unteransprüchen und der nachfolgenden Darstellung eines bevorzugten Ausführungsbeispiels anhand der Abbildung.

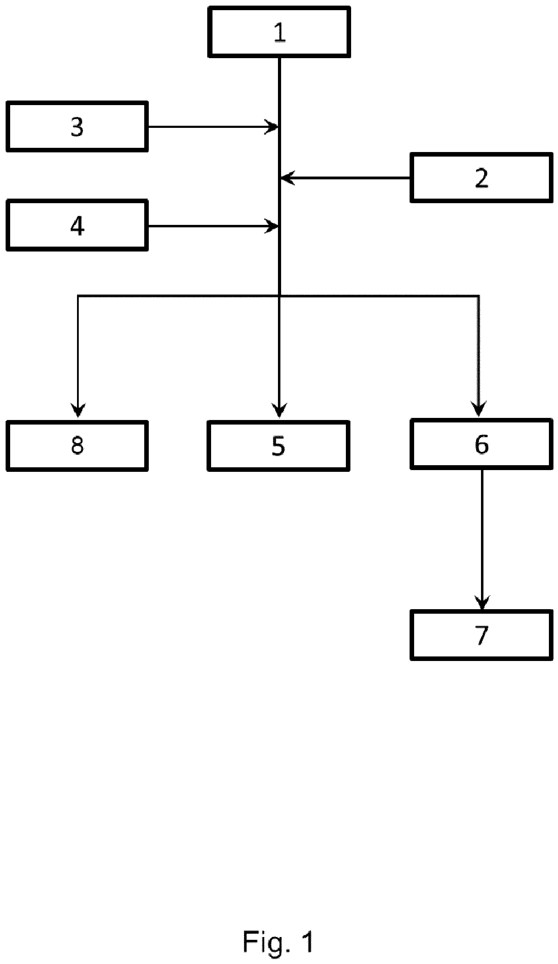

Es zeigt
**Fig. 1** ein Ausführungsbeispiel eines Prozessablaufs zur Entsorgung eines Bauteils aus einem Verbundwerkstoff

**Fig. 1** zeigt ein Ausführungsbeispiel eines Prozessablaufs zur Entsorgung eines Bauteils aus einem Verbundwerkstoff. Zunächst wird bei dem Bezugszeichen 1 das Bauteil aus einem Verbundwerkstoff dem Prozess zugeführt. Das Bauteil kann beispielsweise ein Zentrifugenkörper einer Urananreichungsanlage sein. Das Bauteil kann einen Verbundwerkstoff aufweisen, insbesondere einen Faserverbund mit einer in einen Matrixwerkstoff eingebetteten Faser. Beispielsweise kann es sich bei dem Verbundwerkstoff und einen kohlenstofffaserverstärkten Kunststoff, auch CFK genannt, oder um einen Verbundwerkstoff Aramidfaser beinhaltend handeln. Dem Prozess wird mit der Bezugsziffer 2 Energie, mit der Bezugsziffer 3 ein Moderator und mit der Bezugsziffer 4 ein Oxidationsmittel zugeführt. Das Bauteil kann dabei in einen Ofen, beispielsweise einem Drehrohr- oder Paddelofen oder einem Wirbelschichtreaktor zugeführt werden. Die Energie wird einerseits in Form thermischer Energie zugeführt, indem der Ofen auf mindestens 800°C beheizt wird. Andererseits wird dem Prozess Energie in Form von mechanischer Energie zugeführt. Dabei dient die Zuführung der mechanischen Energie in erster Linie der Schaffung neuer Oberflächen und/oder der Erzielung einer Schürwirkung und damit der Schaffung von besseren Angriffsmöglichkeiten eines Oxidationsmittels. Die Zuführung der mechanischen Energie kann beispielsweise über eine Drehbewegung, beispielsweise durch Rühren, und/oder über eine Verwirbelung des Bauteils und / oder von Teilen des Bauteils geschehen. Der Moderator wird zur energetische Prozessregulierung zugeführt. Der Moderator kann in Form von Wasser als Restfeuchte des Werkstoffs des Bauteils in den Prozess eingebracht werden. Der Moderator kann dem Prozess aber auch alternativ oder zusätzlich gasförmig zugeführt werden, insbesondere auch geregelt oder gesteuert zudosiert werden, wobei der Moderator Wasserdampf, Ammoniak und / oder Kohlenstoffdioxid enthalten kann. Über die definierte Zuführung des Moderators in Abhängigkeit des zu vergasendem Verbundwerkstoffs und / oder der Prozesstemperatur und / oder der Prozessgeschwindigkeit kann eine endothermische Prozessführung erzwungen werden. Durch die endothermische Prozessführung ist der Prozess jederzeit beherrschbar. Weiterhin wird dem Prozess bei der Bezugsziffer 4 ein Oxydationsmittel zugeführt. Das Oxydationsmittel kann Sauerstoff enthalten. Beispielsweise kann das Oxydationsmittel eine leicht sauerstoffabgebende Verbindung, wie beispielsweise Wasserstoffperoxid, Permanganat oder Dichromat, oder auch reiner Sauerstoff sein. Die Zuführung des Oxydationsmittels kann gesteuert oder geregelt werden. Als Regelgröße kann beispielsweise die Prozesstemperatur genutzt werden. Aber auch der Volumendurchsatz kann benutzt werden, um den Zuführungsstrom des Oxidationsmittels zu steuern oder zu regeln. Beide Größen lassen sich leicht messen und sind durch die Variation der zugeführten Menge an Oxidationsmittel je Zeiteinheit leicht zu beeinflussen. Prozessgeschwindigkeit und Materialdurchsatz werden derart gesteuert oder geregelt, dass eine vollständige Umsetzung aller vergasbaren Werkstoffe des Bauteils erfolgt. Der Umsetzungsgrad lässt sich in weiten Grenzen über die Prozessgrößen Energieeintrag und Massendurchsatz an Oxidationsmittel und umzusetzenden Werkstoff beeinflussen.

Als Edukt liegen bei der Bezugsziffer 5 die Grundbestandteile des Verbundwerkstoffs vor. Bei der Bezugsziffer 6 liegen eventuelle kondensierbare Stoffe des Bauteils, die höchstens partiell umgesetzt wurden, vor. Diese können bei Bezugsziffer 7 nachverbrannt werden. Bei der Bezugsziffer 8 liegen eventuelle nicht vergasbare Stoffe des Bauteils vor, sowie insbesondere die nicht vergasbaren Verunreinigungen wie beispielsweise Uranverbindungen.

Die Figur ist nicht so zu verstehen, dass die Prozessschritte in einer bestimmten Reihenfolge erfolgen müssen. Vielmehr ist es beispielsweise auch möglich, dass nach Schritt 4, d.h. nach der Zuführung eines Oxidationsmittels, nochmals Energie zugeführt wird. Energie in Form von thermischer und/oder mechanischer Energie kann auch über den gesamten Prozess zugeführt werden. Ebenso können im Batchbetrieb auch schon vor Zugabe des Oxidationsmittels in Schritt 4 kondensierbare Stoffe (Schritt 6) entstehen.
In einer weiteren Ausführungsform des Verfahrens werden kondensierbare Werkstoffe des Bauteils, die höchstens partiell umgesetzt wurden, nachverbrannt. Die Nachverbrennung ist dem Fachmann bekannt, so dass er geeignete Verfahren und Verfahrensparameter auswählen kann.

Die hier gezeigten Ausführungsformen stellt nur ein Beispiel für die vorliegende Erfindung dar und darf daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 1: Zuführen eines Bauteils aus einem Verbundwerkstoff
- 2: Energiezuführung
- 3: Moderatorenzuführung
- 4: Oxidationsmittelzuführung
- 5: Grundbestandteile des Verbundwerkstoffs
- 6: partiell umgesetzte kondensierbare Stoffe
- 7: Nachverbrennung
- 8: nicht vergasbare Stoffe

## Patentansprüche

1. Verfahren zur Entsorgung eines Bauteils einen Verbundwerkstoff enthaltend,
**dadurch gekennzeichnet,**
**dass** das Bauteil chemisch vergast wird, wobei zumindest ein Anteil des Verbundwerkstoffs in seine Grundbestandteile zerlegt wird.

2. Verfahren gemäß Anspruch 1,
**dadurch gekennzeichnet,**
**dass** bei der chemischen Vergasung alle vergasbaren Bestandteile des Verbundwerkstoffs schrittweise chemisch vergast werden.

3. Verfahren gemäß Anspruch 1,
**dadurch gekennzeichnet,**
**dass** bei der chemischen Vergasung alle vergasbaren Bestandteile des Verbundwerkstoffs weitestgehend gleichzeitig chemisch vergast werden.

4. Verfahren gemäß einem der vorherigen Ansprüche,
**dadurch gekennzeichnet,**
**dass** die chemische Vergasung unter Einwirkung von mechanischer Energie durchgeführt wird.

5. Verfahren gemäß Anspruch 4,
**dadurch gekennzeichnet,**
**dass** die mechanische Energie über eine Drehbewegung eingebracht wird.

6. Verfahren gemäß Anspruch 4 oder 5,
**dadurch gekennzeichnet,**
**dass** die mechanische Energie über eine Verwirbelung des Bauteils und/oder von Teilen des Bauteils eingebracht wird.

7. Verfahren gemäß einem der vorherigen Ansprüche,
**dadurch gekennzeichnet,**
**dass** die chemische Vergasung bei einer Temperatur von mehr als 800°C durchgeführt wird.

8. Verfahren gemäß einem der vorherigen Ansprüche,
**dadurch gekennzeichnet,**
**dass** dem Prozess zur energetischen Regulierung ein Moderator zugeführt wird.

9. Verfahren gemäß Anspruch 8,
**dadurch gekennzeichnet,**
**dass** der Moderator Wasser enthält, wobei das Wasser über eine Restfeuchte des Werkstoffs des Bauteils in den Prozess eingebracht wird.

10. Verfahren gemäß Anspruch 8 oder 9,
**dadurch gekennzeichnet,**
**dass** der Moderator gasförmig dem Prozess zugeführt wird, wobei der Moderator Wasserdampf, Ammoniak und / oder Kohlenstoffdioxid enthält.

11. Verfahren gemäß einem der Ansprüche 7 bis 9,
**dadurch gekennzeichnet,**
**dass** der Prozess der chemischen Vergasung endotherm geführt wird.

12. Verfahren gemäß einem der vorherigen Ansprüche,
**dadurch gekennzeichnet,**
**dass** dem Prozess ein Oxydationsmittel zugeführt wird.

13. Verfahren gemäß Anspruch 12,
**dadurch gekennzeichnet,**
**dass** das Oxydationsmittel Sauerstoff enthält.

14. Verfahren gemäß Anspruch 12 oder 13,
**dadurch gekennzeichnet,**
**dass** das Oxydationsmittel derart dosiert wird, dass der Prozess unter kontrollierbaren Bedingungen abläuft, wobei die Entstehung von umweit- und/oder gesundheitsgefährdenden Reaktionsprodukten vermieden wird.

15. Verfahren gemäß einem der vorherigen Ansprüche,
**dadurch gekennzeichnet,**
**dass** Prozessgeschwindigkeit und Materialdurchsatz derart geregelt wird, dass eine vollständige Umsetzung aller vergasbaren Stoffe des Bauteils erfolgt.

16. Verfahren gemäß einem der vorherigen Ansprüche,
**dadurch gekennzeichnet,**
**dass** kondensierbare Stoffe des Bauteils, die höchstens partiell umgesetzt wurden, nachverbrannt werden.
